# EUROPEAN PATENT SPECIFICATION

(11) **EP 1 950 430 B1**
(45) Date of publication and mention of the grant of the patent: **04.05.2011**
(21) Application number: 08100668.6
(22) Date of filing: 18.01.2008
(51) Int. Cl.: F16B 5/06

(54) **Pressure fixing device where the fixed parts can be set, in particular to fix panels or similar articles.**
Druckbefestigungsvorrichtung bei der die miteinander befestigten Teile ausgerichtet werden können, insbesondere um Panele oder ähnliche Artikel zu befestigen.
Dispositif de fixation par pression où le parts peuvent être alignés, en particulier pour des panneaux ou des articles similaires à fixer.

(30) Priority: 22.01.2007 IT PI20070007
(43) Date of publication of application: 30.07.2008
(73) Proprietor: Ciacchini, Enrico, 56010 San Giovanni alla Vena, Vicopisano (PI) (IT); Bandecchi, Fiorenzo, 56010 San Giovanni alla Vena, Vicopisano (PI) (IT); Lottini, Roberto, Biscayne, Florida Key (US)
(72) Inventor: Ciacchini, Enrico, 56010 San Giovanni alla Vena, Vicopisano (PI) (IT); Bandecchi, Fiorenzo, 56010 San Giovanni alla Vena, Vicopisano (PI) (IT); Lottini, Roberto, Biscayne, Florida Key (US)
(74) Representative: Turini, Laura

(56) References cited:
- WO-A-01/50026

## Description

### Technical Field

The present inventione refers generally to the fitting devices field, in particular it refers to a device, specially suitable for the fitting of panels or similar articles, which beyond the ability to firmly fit two parts to each other, it is able to allow the exact setting of the position of one of the parts respect to the other, while they are fitted according to the first part of claim 1 (WO 01/50026).

### Background Art

Are well known and widely used many devices and solution to fit more parts or articles, of different shapes and features, to each other, or to a fixed structure, as for example a wall or similar,

Until now are used removable means to fit walls or skin panels to a fixed structure, as nails or glues, that make the press stable but difficult the removing of the panel once they are applied. Another flaw of the nowadays known systems is that the user must be really precise when positioning the panels, as once it is applied there is no possibility to adjust it to the dimentions of the leaning structure.

The above mentioned technical problems are particularly found when coating the internal of a house or of a watercraft with panels, for example in wood, which could be removed to make some cable or wiring maintainance that pass behind them. Moreover, these panels, so far as well constructed, shall be often be adjusted in loco to the real dimentions of the room.

Generally these known devices, even if they assure a good stability between the sides, once they are fitted do not allow an easy and fast dismantling and removing of the same parts.

Moreover, these known devices do not allow adjustments, or even limited locating movements between the sides, both during and after the fitting operation, with the aim to adapt them to the actual conditions where these parts are assembled and fitted.

It is clear the need, in the application context outlined above, to develop new technical solutions, respect to the ones alrealy known and used, that are able to make handier and more efficient these fitting devices, improving in general the efficiency both in terms of easiness and handiness and also of firmness of the fitted elements.

As mentioned above, among the efficiencies of these fitting device that should deserve a special attention e for which are appreciated ulterior and on-going improvements, there is the one that assures a good and optimal regolation between the sides, during and after the fitting operation, so that the executive time is reduced as much as possible and in the same time an easy and exact adjustment between the sides is allowed after they are fitted.

In particular, in the light of the increasing spreading of structures and coverings that use, as main element and/or modular unit, panels or similar plate-shape articles, there is the need to find solutions that allow to fit in a faster and handier way, for example to cover walls or environments of various kind, these types of elements, as panels or similar, which are in way that allow an exact adjustment and positioning both during and after the fitting, to make the use of these structures and covering much more convenient.

### Disclosure of invention

Therefore the aim of this invention is to find a solution to the technical requirements mentioned above, proposing a fitting device, with innovative features respect to the known ones, which is in a way to allow an easy and handy fitting of panels or similar plate-shape articles, and a fast eventual removal, that is also provided with an adjustment capacity, so that it allows an optimal adjustment and positioning of the articles and panels during and after their fitting.

The above mentioned aims are reached by the fitting device according to independent claim 1.

Special realization solution of the fitting device of the invention are moreover defined by the dependent claims.

As it will be clear in the part of the description that follows, the fitting device of the invention is very usefull in many applications, among which we mention only as an example the one to cover with panels wide surfaces and walls of environments, as for example the interiors of ships, thanks to the possibility, characteristic of this device, to centre, locate and regulate exactly the panels to each other, as also the possibility, when necessary, to remove them easily when they are not needed anymore, for example with a simple sucker.

These and other aims, characteristics and advantages of the present invention will result clear and evident from the following description of one of its pattern realization, made to illustrate and not to limite the invention, with reference to the annexd drawings, also given to illustrate and not to be considere limite in a restraining manner.

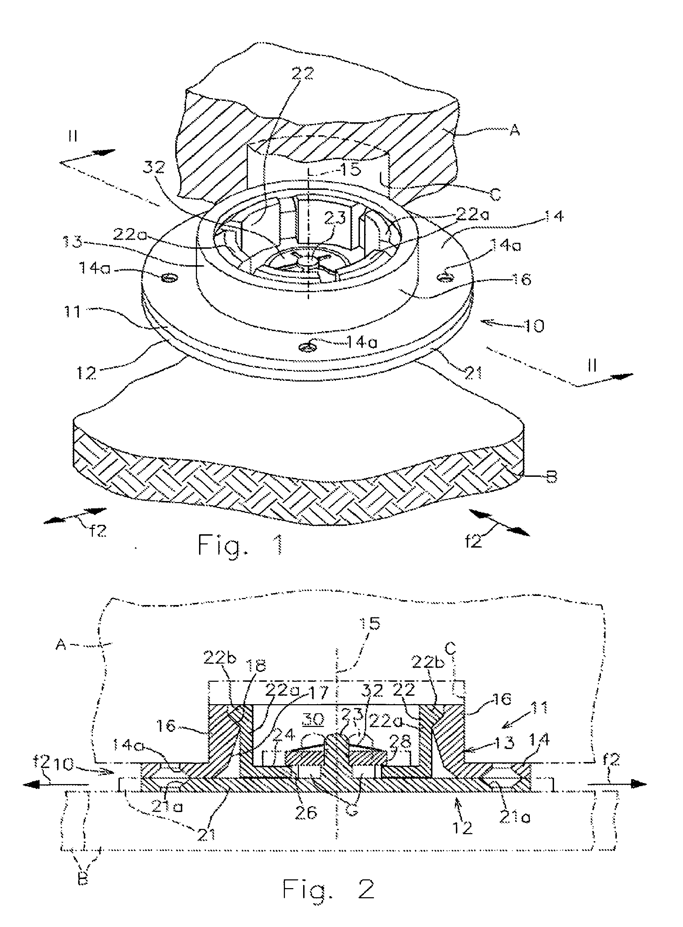

With reference t Fig. 1 a fitting device, according to the present invention, is indicated generally with 10.

The device 10 is made essentially by two basic elements respectively made by a first fitting element, indicated with 11, and a second fitting element, indicated with 12.

These two fitting elements 11 and 12, that present both a shape essentially of spinning or cylindrical symmetry, are expected to be firmly and solidly fitted on the respective parts to be fitted, and to be afterwards coupled by pressure to make the final fitting between them, as it will be better described further on.

Fig. 1 and 2 represent the fitting device 10 in the assembled configuration, or better with the two fitting elements 11 and 12 reciprocally coupled by pressure, along a commond simmetric axis, and moreover with the respective parts, indicated with A and B and represented partially and with a hatched pointed line, fitted to each other through the fitting device 10 placed between the parts A and B.

For example one of the parts A and B is constituted by a panel or by a plate-shape similar article, while the other part could be a wall or a generic surface or fixed structure, or the two part A and B, to be fitted through the device 10, could be both constituted by panels, or still other articles and objects.

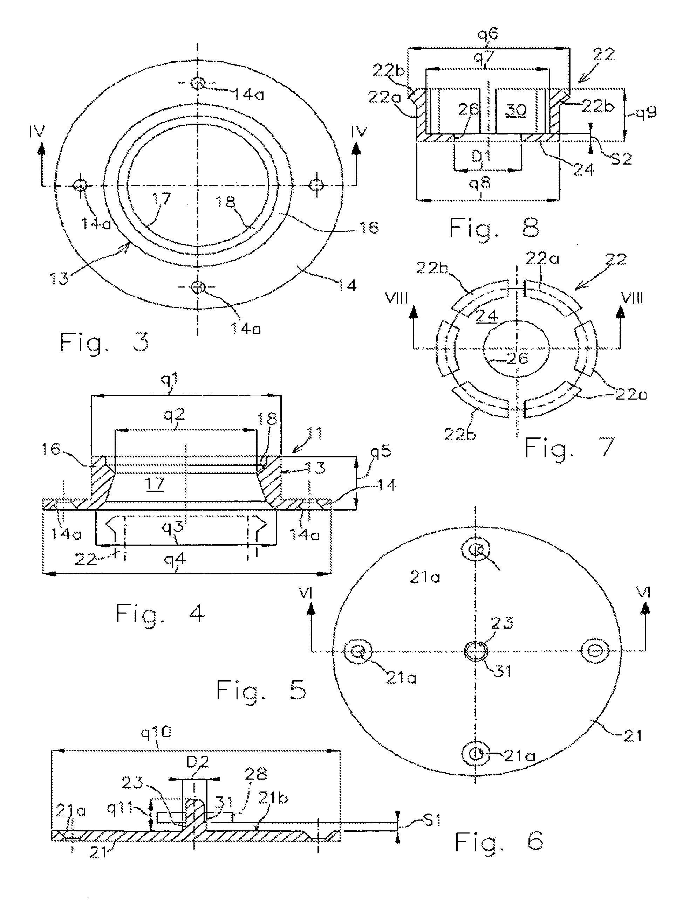

As clearly shown in Fig. 3, 4 and 9, the first fitting element 11 is made by a fitting body 13, that has on one end a flange 14 used to firmly fit the first fitting element 11 to a respective first part A, for example constituted by a fixed structure as it could be a wall or other.

For this aim the flange 14 has a plurality of holes 14a to allow the insertion of screws or other elements, which are not represented in the drawings, made to firmly fit the first fitting element 11 to the wall or part A.

Moreover the fitting body 13 comprises a portion 16 with a cylindrical shape, that defines an axis of simmetry 15, that protudes and extends in a direction orthogonal to the flange 14, and that represents a central cavity 17, in turn equipped, along the respective internal wall and in a zone distant from the flange 14, with a circular projection 18, protruding toward the inside of the cavity 17.

When the first element 11 is fitted to the part or to the wall A, the cylindrical protuding portion 16 that defines the cavity 17 is, for example, placed in a correspondent cavity C or hollowed zone shaped on the wall A.

With reference to Fig. 5, 6, 7, 8, and 9, the second fitting element 12 is in turn made by a group constituted by more parts, in particular by a securing plate 21, that is used to firmly fit to a respective second part B to be fit, for example preferably a panel or a plate-shape similar article, and by a fitting insert 22, needed to be elastically inserted into the cavity 17 of the first fitting element 11, as it will be better shown further on.

Similarly to the flange 14 of the first fitting element 11, the securing plate 21 comprises a plurality of holes 21a to allow the insertion of screws or other appropriate fitting means to firmly fit the second fitting element 12 to the part or panel B.

In the composite structure that constitutes the second fitting element 12, the fitting insert 22 is kept mobile, or rather free to move, on the securing plate 21, as better described further on, and for this reason it is inserted on a central pin 23 created in a central zone of the same securing plate 21 and it is protruding from this last one.

Moreover the fitting insert 22 has a cylindrical shape, almost as a cup, that approach internally a cavity 30, with a base 24 that presents an adjustment hole 26,

in which is inserted the pin 23 of the securing plate 21, and a plurality of portions or fins 22a with a stretched shape that extend to the base 24 and present each on the tip, in the zone opposite to the base 24, a pawl 22b that protrude toward the outside of the fitting insert 22.

The fins 22a are in a way to react elastically, by deforming and bending toward the internal cavity 30, when they are urged into a transversal direction in the tip zone, or rather of the respective pawl 22b.

The internal diameter D1 (Fig. 8) of the adjustment hole 26 is greater than the external diameter D2 (Fig. 6) of the pin 23 in a way to receive this last one with a certain slack G (Fig. 9), and therefore allow the adjustment ans positioning between the two fitting elements 11 and 12 and therefore between the respective parts A and B, as better described further on.

As partly mentioned before, in the composite structure of the second fitting element 12, the elastic insert 22 is kept on the securing plate 21 through appropriate restraining means associated with the pin 23, which is free to move laterally along the securing plate 21 thanks to the slack G found between the adjustment hole 26 and the pin 23.

In particular these restraining means are constituted by a spacer 28, which is blocked in the known manner, as represented with the hatched pointed line in Fig. 6, against a shoulder 31 created on the pin23, for example through an elastic spacer 32, or a similar blocking element.

With the aim to allow the free movement of the fitting insert 22 respect to the pin 23 and along the securing plate 21, the thickness S2 (Fig. 8) of the base 24 of the fitting insert 22 is lightly smaller than the distance S1 (Fig. 6) between the shoulder 31 created on the pin 23 and the surface 21b of the securing plate 21 on which the base 24 is endorsened.

Preferably the different parts, mentioned above, of the fitting device 10 are in plastic, as a POM acetal type plastic, so that they are weathering and chemical agent resistant.

Following and with reference to Fig. 3 - 8 are given some numeric data, given as an example and to be considered as mean values among a certain range, relative to the amount and outstanding dimensions of the main parts that constitutes the fitting device 10 of the invention.
- Diameter D 1 of the adjustment 26 created in the fitting insert 22 =14 mm;
- Diameter D2 of the protruding pin 23 created on the securing plate 21 = 5 mm;
- thickness S2 on the base 24 of the fitting insert 22 = 2 mm;
- external diameter q1 of the cylindrical portion 16 of the first fitting element 11 = 40 mm;
- internal diameter q2. of the cavity 17, created in the first fitting element 11, in correspondence of the projection 18 = 30 mm;
- diameter q3 of the cavity 17 in the entering zone of the insert 22 (indicated for clarity by a hatched pointed line in Fig. 4) = 38 mm;
- diameter q4 of the flangc14 of the first fitting element 11 = 60 mm;
- height q5 of the first fitting element 13 = 13 mm;
- external diameter q6 of the fitting insert 22 in correspondence to the pawls 22b of the wings 22a = 34 mm;
- diameter q7 of the internal cavity 30 defined by the fitting insert 22 = 26 mm;
- external diameter q8 of the fitting insert 22= 30 mm;
- height q9 of the fitting insert 22=13 mm;
- diamter q10 of the securing plate 21 = 60 mm.
- height q11 of the pin 23 = 8 mm.

In the effective use of the fitting device 10 according to the invention, the two respective fitting elements 11 and 12 are at the beginning firmly fitted on the parts A and B, as mentioned before, and for this aim, the flange 14 of the first fitting element 11 and the securing plate 21 of the second fitting element 12 are opportunely fitted on the parts A and B, for example through screws or similar means applicable through the correspondents 14a and 21a.

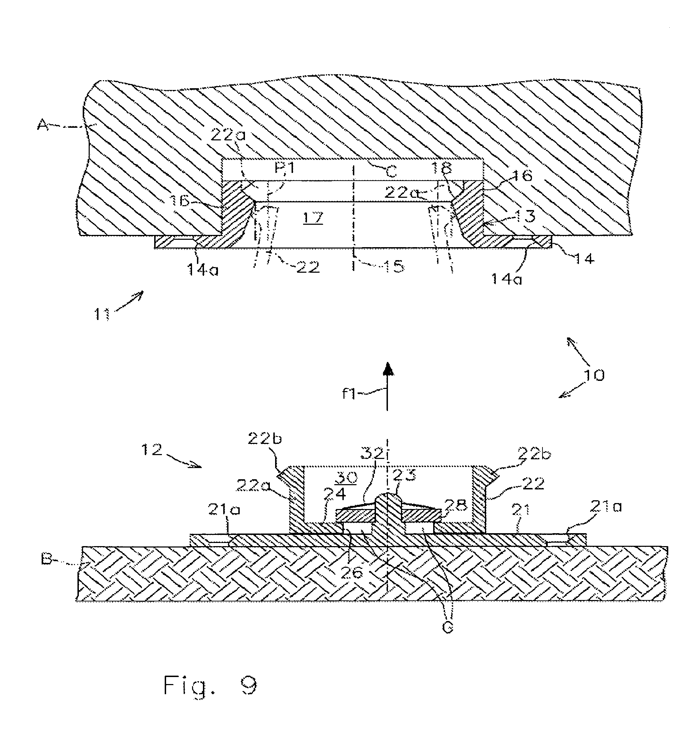

Then, as shown in fig. 9, we proceed with the real fitting operation.

Moreover the two fitting elements I 1 and 12 with the respective parts A and B are approached and brought in contact to each other, as indicated by an arrow f1, applying at the same time a certain amount of pressure in a way to insert and slide the fitting insert 22 of the second fitting element 12 into the cavity 17 of the first fitting element 11.

This insertion of the fitting insert 22 determines, as shown with the hatched pointed line in the same Fig. 9, the elastic deformation of the wings 22a of the fitting insert, right after the respective pawls 22 enter in interference with the projection 18, and therefore the immediate blockage of the pawl 22b of each wing 22a against said projection 18, after having overcomed it, in a determined blocking position indicated with P1, in a way to firmly block the fitting insert 22 in the cavity 17 of the first fitting element 11.

It follows that, as shown in Fig. 2, the fitting device 10 adopts the final assembled configuration, where each movement towards the axial direction, or rather along the axis 15, between the two fitting elements 11 and 12 and therefore also between the parts A and B fitted to them, is practically impeded, causing also the parts to be firmly fitted and blocked to each other as fas each movement or relative displacement along the longitudinal direction correspondent to the axis concerns.

It is anyway possible, both during this pressure coupling phase and after, with the two elements 11 and 12 and therefore with the respective parts A and B, which are costrained to not move one relatively to the other in the axial or longitudinal direction defined by the axis 15, to complete some relative lateral or transversal movements along any direction between the two fitting elements 11 and 12, and therefore between the parts A and B, thanks to the slack G found between the pin 23 and the hole 26 of the elastic insert 22, as indicated by the arrows f2 and the hatched pointed line in Fig. 2.

In this way it is possible to regulate exactly and precisely the position of a part A, B in respect to the other, while they are fitted, or rather to make some limited adjustment movements with the aim to adjust the parts A and B to the real assembling and fitting conditions.

At this point, the two parts A and B can be considered fitted through the fitting device 10.

This operation can be repeated a large numder of time, for example to fit a plurality of panels B against a wall or a surface A to be coated, coupling each time by pressure the fitting elements 12 fitted on the panels B, progressively used during the coating, on the correspondent fitting elements 11 fitted on the wall A, and moreover, if needed, adjusting each time toward a lateral direction the position of each panel B both respect to the wall A and the adjacent panels B up till the coating of the wall A is completed.

Naturally, whenever the two parts A and B, after they have been fitted, shall be then disassembled, it is necessary to separate the two fitting elements 11 and 12 of the fitting device or devices used to fit them.

Moreover, for this aim, it is just needed to apply on each fitting device 10 a strength, with opposite direction compared to the pressure applied during the fitting phase, able to overcome the elastic strength of the wings 22a against the projection 18, such as to extract the fitting insert 22 from the second fitting elements 12 of the cavity 17 of the first fitting elements 11 in which it was inserted.

Thus it is clear from what has been described that the fitting device 10 of the invention allows both to fit and adjust in a fast, efficient and stable way two parts to each other, in particular if they include a panel, without the necessity to recur to glues or other similar products, and also to disasseble in the same practical and fast way without having to recur to special disassembling tools.

Fitting device (10), in particular for panels or similar articles, that comprises a first (11) and a second fitting element (12) suitable to be fitted on two respective parts (A, B) that must be fitted and afterwards coupled by pressure one to the other to fit them,
said device (10) having said first fitting element (11) is made by:
- a fitting body (13) requested to be fitted to a respective first part (A) of said two parts that must be fitted, and
said second fitting element (12) that comprises a group made by:
- a securing plate (21) needed to be fitted to a respective second part (B) of said two parts that must be fitted, and by
- a fitting insert (22) coupleble by pressure to a fitting body (13) of said first fitting element (11), said fitting insert (22) being retained on said securing plate (21) through corresponding retaining means (28), although is free to slide toward a lateral direction (f2) along said securing plate (21) thanks to a certain existing slack (G) between said fitting insert (22) and said securing plate (21),
in a manner that, during and after the fitting operation of said two parts (A, B), said fitting insert (22) is able to slide laterally along said securing plate (21) within the existing slack (G) between them, in a way to allow the positioning and adjustment in a lateral way (f2) said two parts (A, B) one respect to the other.

Said fitting device (10) where said securing plate (21) presents centrally a protruding pin (23),
in which said fitting insert (22) presents an adjustment opening (26), in particular with a shape of an adjustment hole, in which it is inserted the protuding pin (23) of said securing plate (21); said adjustment opening (26) has a dimension (D1) that is greater than the one (D2) of said pin (23) in order to define said slack (G) between the fitting insert (22) and said securing plate (24), and
where said retaining means (28) to retain said fitting insert (22) on the securing plate are associated with said pin (23).

Said fitting device (10) in which the fitting body (13) presents a cavity (17) suitable to receive by pressure said fitting insert (22), when said first (11) and second (12) fitting elements are coupled to fit said two parts (A, B), and
where said cavity (17) and said fitting insert (22) present respective portions (18, 22b) able to interfere and deform elastically, when said fitting insert (22) is inserted in said cavity (17), and therefore detenninate the blockage and beating (P1) of said fitting insert (22) in said cavity (17),

Said fitting device (10) where said respective portions of said cavity (17) and of said fitting insert (22), able to interfere and elastically deform, are shaped respectively as a projection (18) protruding toward the inside of said cavity (17) and of a pawl (22b).

Said fitting device (10) where said fitting body (13), the respective cavity (17) created in said fitting body, and said fitting insert (22) requested for the insertion of said cavity (17) have substantially a cylindrical shape.

Said fitting device where the pawl (22b) of said fitting device (22) is created on a portion (22a) of this last one able to elastically deform when said pawI (22b) interferes with said projection (18), during the insertion of the insert (22) in said cavity (17).

Said fitting device according to claim 5 or 6, where said fitting insert (22) of said second fitting element (12) has a shape that is vaguely as a cylindrical cup, externally correspondent to the one of the central cavity (17) of said first fitting element (11), with a base (24) that presents said adjustment hole (26) and with a plurality of portions (22a), elastically deformable , that extend toward a direction substantially orthogonal in respect to said base, where said elastic portions are supplied each with a respective pawl in a pointed zone opposite to said base.

Said fitting device, where said retaining means are made by a spacer (28) assembled on said pin and firmly blocked on this last one through a blocking element (32).

Said fitting device (10), where said spacer (28), in order to retain said fitting inscrt(22) on said securing plate (21), is blocked, in a determined position, against a shoulder or corner (31) of said pin (23) through said blocking element (32), said determined position is in a way to leave said insert (22) free to slide laterally (f2) on said securing plate (21) thanks to the slack (G) between said adjustment hole (26) and the pin (23), of said securing plate (21) on which said insert (22) is inserted.

Said fitting device (10) where said blocking element of said spacer (28) is made by an elastic spacer (32).

Said fitting device where said adjustment hole (26) has a circular shape with a diameter (D1) greater than the one (D2) of said pin (23).

Said fitting device where the diameter (D1) of saif adjustment hole (26) is within a range that goes from 20 to 30 mm, and the diameter (D2) of said pin (23) is within a range from 10 to 30 mm.

Said fitting device where said fitting body (13) comprises, on one end, a portion defining a flange (14) for the fitting of said first fitting element (11) to the first part to be fit (A), and a portion (16), protruding and extending in a substantially orthogonal direction respect to the flange (14), that presents a central cavity (17. Said fitting device where said projection (18) has along the internal wall said cavity (17) of said first fitting element (11), in a zone distant from said flange (14). Method for fitting panels or similar article that comprises the following phases:
- apply a first (11) fitting element to a first part (A) that need to be fitted.
- apply a second (12) fitting element to a corresponding part (B) that need to be fitted.
- couple by pressure one to the other the elements (11) and (12) and then the corresponding parts (A) and (B).

Foretold method that comprises a fitting element (12) made by a securing plate (21), needed to be fitted to a corresponding second part (B), and by a fitting insert (22) coupleble by pressure to the fitting body (13) of said first fitting element (11); said fitting insert being retained on said securing plate (21) through corresponding retaining means (28), even if is free to slide laterally (f2) along said securing plate (21) thanks to a certain slack (G) found between said fitting insert (22) and said securing plate (21), comprises a further phase:
- to slide, during and after the fitting operation of said two parts (A, B), the fitting insert (22), able to slide laterally along said securing plate (21) within the existing slack (G) between them, in a way to allow the positioning and adjustment in a lateral way (f2) said two parts (A, B) one respect to the other.

Of course the fitting device until now described can be object of developments and/or it can be modified or improved, without having to leave the present invention's area.

### Brief description of drawings

Fig. 1 is a prespective view of the fitting device according to the present invention;
Fig. 2. is a partial view in section according to the line II-II of the fitting device of Feg. 1;
Figg. 3 and 4 are respectively a plan view and a section view according to line IV-IV of Fig. 3 of a first part, that comprises a fitting body, of which is composed the fitting device of Fig. 1;
Figg. 5 and 6 are respectively a plan view and a section view according to line VI-VI of Fig. 5 of a second part, that comprises a securing plate, of which is composed the fitting device of Fig. 1;
Figg. 7 and 8 are respectively a plan view and a section view according to line VIII-VIII of Fig. 7 of a third part, that comprises an elastic insert, of which is composed the fitting device of Fig. 1; and
Fig. 9 is a partial view that shows in section the fittine device of Fig. 1 during the effective use to fit the two parts.

## Claims

1. Fitting device (10) particularly suitable to fit panels and realize coatings with such articles, comprising:
- A first fitting element (11) and a second fitting element (12) respectively connectable to a part (A,B) to be connected and then the two fitting elements (11, 12) being connectable to each other by pressure to fit them, wherein the second fitting element (12) comprises a securing plate (21) connectable to a part (A, B) and provided with a central pin (23) created in a central zone of the securing plate (21) and protruding from it and an elastic fitting insert (22) configured to be inserted and elastically blocked into a cavity (17) of the first fitting element (11) and wherein said elastic fitting insert (22) is cylindrical shaped with a base (24) that presents an adjustment hole (26) into which the pin (23) of the securing plate is received, the internal diameter (D1) of the adjustment hole (26) being greater than the external diameter (D2) of the pin (23) in such a way to receive the pin with a certain slack (G) so that it is free to move laterally and therefore to allow limited movement relative to the adjustment and/or positioning (f2) between the parts (A,B), during and after the fitting operation and;
- Restraining means (28) associated with the pin for connecting the elastic fitting insert (22) to the securing plate (21) and
**characterized by** the fact that said restraining means are constituted by a spacer (28) blocked against a shoulder (31) created on the pin via a blocking element (32).

2. Fitting device (10), according to claim 1, wherein said blocking element (32) comprises an elastic spacer (32).

3. Fitting device (10), according to claims 1 or 2, wherein the thickness (S2) of the base (24) of the fitting insert (22) is smaller than the distance (S1) between the shoulder (31) created on the pin (23) and the surface (21b) of the securing plate (21) on which the base (24) is endorsed.

4. Fitting device (10), according to claim 3, wherein (S2) is 2 mm.

5. Fitting device (10), according to claim 1, wherein the fitting element (11) comprises a fitting body (13) that has on one end a flange (14) for fitting the fitting element to a respective part (A, B) and a portion (16) cylindrical shaped that protrudes and extends in a direction orthogonal the flange (14) for forming the central cavity (17) into which the elastic fitting insert (22) is inserted.

6. Fitting device (10), according to claim 5, wherein the cavity (17) is in turn equipped along the respective internal wall with a circular projection (18) protruding towards the inside of the cavity.

7. Fitting device (10), according to claim 5, wherein the flange (14) is provided with a plurality of holes (14a) to allow the insertion of screw or other elements for firmly fit the fitting element (11) to the part (A, B).

8. Fitting device (10), according to claim 5, wherein the cylindrical protruding portion (16) that defines the cavity (17) is configured to be insertable in a correspondent cavity (C) or hollowed zone shaped on a part (A, B).

9. Fitting device (10), according to claim 1, wherein the securing plate (21) comprises a plurality of holes (21a) to allow the insertion of screws or other appropriate fitting means to firmly fit the second fitting element (12) to the part (A, B).

10. Fitting device (10), according to any of preceding claims, wherein said fitting device is in plastic as a POM acetal type plastic, so that it resists weathering and chemical agent resistant.

## Patentansprüche

1. Montageinrichtung (10), besonders geeignet für die Montage von Paneelen und das Erstellen von Beschichtungen mit derartigen Artikeln, die Folgendes aufweist:
- ein erstes Montageelement (11) und ein zweites Montageelement (12), die jeweils mit einem anzuschließenden Teil (A, B) verbunden werden können, und wobei anschließend die beiden Montageelemente (11, 12) durch Druck miteinander verbunden werden können, um sie zu montieren, wobei das zweite Montageelement (12) eine Sicherungsplatte (21) aufweist, die mit einem Teil (A, B) verbunden werden werden kann und mit einem zentralen Bolzen (23) versehen ist, der in einem zentralen Bereich der Sicherungsplatte (21) ausgebildet ist und der daraus herausragt, sowie mit einem elastischen Montageeinsatz (22), der für das Einsetzen in einen Hohlraum (17) des ersten Montageelements (11) und die elastische Sperre darin ausgebildet ist, und wobei der elastische Montageeinsatz (22) eine zylindrische Form hat mit einer Basis (24), die eine Anpassungsbohrung (26) aufweist, in der der Bolzen (23) der Sicherungsplatte aufgenommen wird, wobei der Innendurchmesser (D1) der Anpassungsbohrung (26) größer ist als der Außendurchmesser (D2) des Bolzens (23), sodass der Bolzen mit einem bestimmten Spiel (G) aufgenommen wird, sodass er sich frei seitlich bewegen kann und daher die begrenzte Bewegung relativ zur Anpassung und/oder Positionierung (f2) zwischen den Teilen (A, B) während des Montagevorgangs und danach möglich ist; und
- Rückhaltemittel (28), die dem Bolzen zugeordnet sind, um den elastischen Montageeinsatz (22) mit der Sicherungsplatte (21) zu verbinden und
**dadurch gekennzeichnet, dass** die Rückhaltemittel aus einem Abstandselement (28) bestehen, das über ein Sperrelement (32) gegen eine auf dem Bolzen ausgebildete Schulter (31) gesperrt wird.

2. Montageeinrichtung (10) nach Anspruch 1, wobei das Sperrelement (32) ein elastisches Abstandselement (32) *[sic]* aufweist.

3. Montageeinrichtung (10) nach Anspruch 1 oder 2, wobei die Dicke (S2) der Basis (24) des Montageeinsatzes (22) kleiner ist als der Abstand (S1) zwischen der auf dem Bolzen (23) ausgebildeten Schulter (31) und der Oberfläche (21b) der Sicherungsplatte (21), auf der die Basis (24) getragen wird.

4. Montageeinrichtung (10) nach Anspruch 3, wobei (S2) 2 mm beträgt.

5. Montageeinrichtung (10) nach Anspruch 1, wobei das Montageelement (11) einen Montagekörper (13) aufweist, der an einem Ende einen Flansch (14) zur Montage des Montageelements an einem entsprechenden Teil (A, B) hat sowie einen zylindrisch geformten Abschnitt (16), der in einer zum Flansch (14) senkrechten Richtung herausragt und verläuft, um den zentralen Hohlraum (17) zu bilden, in den der elastische Montageeinsatz (22) eingesetzt wird..

6. Montageeinrichtung (10) nach Anspruch 5, wobei der Hohlraum (17) wiederum entlang der entsprechenden Innenwand mit einem kreisförmigen Vorsprung (18) versehen ist, der in Richtung auf das Innere des Hohlraums herausragt.

7. Montageeinrichtung (10) nach Anspruch 5, wobei der Flansch (14) mit einer Vielzahl von Bohrungen (14a) versehen ist, damit Schrauben oder andere Elemente eingesetzt werden können, um das Montageelement (11) fest am Teil (A, B) zu montieren.

8. Montageeinrichtung (10) nach Anspruch 5, wobei der herausragende zylindrische Abschnitt (16), der den Hohlraum (17) definiert, so gestaltet ist, dass er in einen entsprechenden Hohlraum (C) oder in einen auf einem Teil (A, B) ausgeformten hohlen Bereich eingesetzt werden kann.

9. Montageeinrichtung (10) nach Anspruch 1, wobei die Sicherungsplatte (21) eine Vielzahl von Bohrungen (21a) aufweist, um das Einsetzen von Schrauben oder anderen geeigneten Montagemitteln zu ermöglichen, um das zweite Montageelement (12) fest am Teil (A, B) zu montieren.

10. Montageeinrichtung (10) nach einem der vorstehenden Ansprüche, wobei die Montageeinrichtung in Kunststoff wie z. B. POM-Acetalkunststoff ausgeführt ist, sodass sie der Verwitterung widersteht und widerstandsfähig gegen chemische Wirkstoffe ist.

## Revendications

1. Dispositif de fixation (10) particulièrement approprié pour fixer des panneaux et pour réaliser des placages avec ces éléments, comprenant :
- un premier élément d'attache (11) et un second élément d'attache (12) respectivement assemblables à une partie (A,B) devant être reliée et ensuite les deux éléments d'attache (11,12) étant assemblables l'un à l'autre par pression, ledit second élément d'attache (12) comprend une plaque de fixation (21) assemblable à une partie (A,B) et dotée d'une tige centrale (23) créée dans une zone centrale de la plaque de fixation (21) et ressortant de celle-ci ainsi qu'un insert de fixation élastique (22) configuré pour être inséré et élastiquement bloqué dans une cavité (17) du premier élément d'attache (11) et dans lequel ledit insert de fixation élastique (22) présente une forme cylindrique avec une base (24) équipée d'un orifice d'ajustement (26) dans lequel la tige (23) de la plaque de fixation vient se loger, le diamètre interne (D1) de l'orifice d'ajustement (26) étant supérieur au diamètre externe (D2) de la tige (23) de façon à recevoir la tige avec un certain relâchement (G) et à pouvoir se déplacer latéralement et par conséquent permettre le mouvement limité par rapport à l'ajustement et/ou le positionnement (f2) entre les parties (A,B), pendant et après l'opération de fixation et ;
- un moyen de retenue (28) associé à la tige pour relier l'insert de fixation élastique (22) à la plaque de fixation (21) et
**caractérisé par le fait que** ledit moyen de retenue est constitué par une entretoise (28) bloquée contre un épaulement (31) créé sur la tige par l'intermédiaire d'un élément de blocage (32).

2. Dispositif de fixation (10), selon la revendication 1, dans lequel ledit élément de blocage (32) comprend une entretoise élastique (32).

3. Dispositif de fixation (10), selon les revendications 1 ou 2, dans lequel l'épaisseur (S2) de la base (24) de l'insert de fixation (22) est inférieure à la distance (S1) entre l'épaulement (31) créé sur la tige (23) et la surface (21b) de la plaque de fixation (21) sur laquelle la base (24) est adossée.

4. Dispositif de fixation (10) selon la revendication 3, dans lequel (S2) est de 2 mm.

5. Dispositif de fixation (10) selon la revendication 1, dans lequel l'élément de fixation (11) comprend un corps de fixation (13) comportant un bord (14) sur une extrémité pour fixer l'élément de fixation à une partie respective (A, B) et à une partie (16) de forme cylindrique qui ressort et s'étend dans une direction orthogonale au bord (14) pour former la cavité centrale (17) dans laquelle l'insert de fixation élastique (22) vient se loger.

6. Dispositif de fixation (10) selon la revendication 5, dans lequel la cavité (17) est à son tour dotée le long de la paroi interne respective d'une saillie circulaire (18) ressortant vers l'intérieur de la cavité.

7. Dispositif de fixation (10), selon la revendication 5, dans lequel le bord (14) est doté d'une multitude d'orifices (14a) pour permettre l'insertion de la vis ou d'autres éléments afin de fixer solidement l'élément de fixation (11) à la partie (A, B).

8. Dispositif de fixation (10), selon la revendication 5, dans lequel la partie saillante cylindrique (16) qui définit la cavité (17) est configurée de façon à pouvoir s'insérer dans une cavité correspondante (C) ou une zone creuse formée sur une partie (A, B).

9. Dispositif de fixation (10), selon la revendication 1, dans lequel la plaque de fixation (21) comprend une multitude d'orifices (21a) pour permettre l'insertion des vis ou d'autres éléments de fixation appropriés afin de fixer solidement le second élément de fixation (12) à la partie (A, B).

10. Dispositif de fixation (10) selon l'une quelconque des revendications précédentes, dans lequel ledit dispositif de fixation est en plastique, tel que du plastique POM du type acétal, de sorte à pouvoir résister aux intempéries et aux produits chimiques.
